# EUROPEAN PATENT SPECIFICATION

(11) **EP 1 750 290 B1**
(45) Date of publication and mention of the grant of the patent: **22.10.2008**
(21) Application number: 05016973.9
(22) Date of filing: 04.08.2005
(51) Int. Cl.: H01H 13/14, H01H 9/18, H01H 11/00, B29C 45/00

(54) **Key module and manufacturing method thereof**
Tastenmodul und Verfahren zu dessen Herstellung
Module à touches et son procédé de fabrication

(43) Date of publication of application: 07.02.2007
(73) Proprietor: Silitech Technology Corp., Tamsui Taipei Hsien (TW)
(72) Inventor: Lin, Chun-Wei, I Lan Hsien (TW); Wang, Yu-Tsai, Taipei Hsien (TW); Lien, Yu-Yen, Taipei Hsien (TW)
(74) Representative: Viering, Jentschura & Partner

(56) References cited:
- US-A- 4 459 256
- US-B1- 6 416 844
- PATENT ABSTRACTS OF JAPAN vol. 2003, no. 12, 5 December 2003 (2003-12-05) & JP 2004 221078 A (JECKSON ELECTRIC CO LTD), 5 August 2004 (2004-08-05)
- PATENT ABSTRACTS OF JAPAN vol. 1996, no. 11, 29 November 1996 (1996-11-29) & JP 08 185755 A (SHIN ETSU POLYMER CO LTD), 16 July 1996 (1996-07-16)
- PATENT ABSTRACTS OF JAPAN vol. 012, no. 164 (M-698), 18 May 1988 (1988-05-18) & JP 62 279911 A (ALPS ELECTRIC CO LTD), 4 December 1987 (1987-12-04)
- PATENT ABSTRACTS OF JAPAN vol. 1997, no. 08, 29 August 1997 (1997-08-29) & JP 09 097531 A (ACHILLES CORP), 8 April 1997 (1997-04-08)

## Description

### BACKGROUND OF THE INVENTION

### 1. Field of the Invention

The present invention is related to a key module and its manufacturing method, and more particularly, to an integrated key module that is made by jostling a combination of a display body and an elastic body to a key body so that the combination of the display body and the elastic body are closely attached to the key body.

### 2. Description of Related Art

With the arrival of the age of information technologies and the progress of Internet technologies for communication, mobile phones, also called cellular phones, have become one of the most popular communication tools. Since mobile phones are compact, easily carried and low-cost and have multiple functions, they are used more and more extensively these days. In general, when consumers purchase a mobile phone, they are concerned mostly with the functionality and appearance of the mobile phone. In order to meet these requirements, various mobile phones with numerous functions and attractive appearance are introduced every year to the market.

Commonly, the key module of a conventional mobile phone that is compact in size is made of finished products or semi-finished products of various components such as metal, plastic or silicone rubber and are first made and then combined with a mobile phone via attachment or adhesion methods.

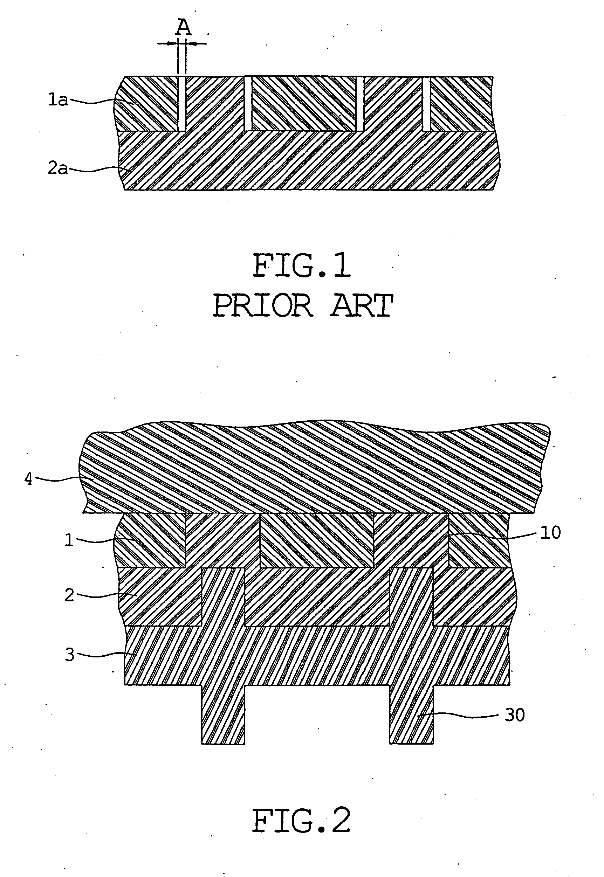

Reference is made to Fig. 1, which is a schematic diagram of a conventional key module that has a gap between the combined components. As shown in Fig. 1, due to the limit of conventional manufacturing capabilities, a gap A, which is about 0.03mm, is required for combining an upper component 1a having opening portions with a matching component 2a. However, the gap A usually ruins the esthetic appearance and the tightness of the product. Thus, it is undesirable for manufacturers and users.

Such a key module is known e.g. from the document US-A-4 459 256.

Accordingly, as discussed above, the prior art still has some drawbacks that could be improved upon. The present invention aims to resolve the drawbacks of the prior art.

### SUMMARY OF THE INVENTION

An objective of the present invention is to provide a key module and its manufacturing method. Via a specific manufacturing process, the appearance of the key module is almost seamless. Thus, an integrated, compact and thin key module is formed. The present invention can compress, inject or infuse silicone rubber (or an elastic material) into opening portions to make the gap located between the key body and display body or between the key body and the elastic body smaller than 0.01 mm.

For reaching the objective above, the present invention provides a method for manufacturing a key module, including: providing a mold; forming a key body having multiple opening portions on the mold; jostling a combination of a display body and an elastic body to the key body; and finally, tightly attaching the display body to the key body and stuffing the display body into the opening portions of the key body. Therein, the elastic body has a lower end formed with a contact block contacting a circuit board.

For reaching the objective above, the present invention also provides a method for manufacturing a key module, including: providing a mold; forming a key body having multiple opening portions on the mold; jostling a combination of a display body, a first elastic body and a second elastic body to the key body; and finally, tightly attaching the first elastic body to the key body and stuffing the first elastic body into the opening portions of the key body. Therein, the second elastic body has a lower end formed with a contact block contacting a circuit board.

For reaching the objective above, the present invention provides a key module, including a key body, a display body and an elastic body. The key body has multiple opening portions. The display body is tightly integrated with and covered on a surface of the key body and tightly stuffed into the opening portions of the key body. The elastic body is tightly integrated with and covered on a surface of the display body and has a lower end formed with a contact block.

For reaching the objective above, the present invention provides another key module, including a key module, including a key body, a first elastic body, a display body and a second elastic body. The key body has multiple opening portions. The first elastic body is tightly integrated with and covered on a surface of the key body and tightly stuffed into the opening portions of the key body. The display body is tightly integrated with and covered on a surface of the first elastic body. The second elastic body is tightly integrated with and covered on a surface of the display body and has a lower end formed with a contact block.

Numerous additional features, benefits and details of the present invention are described in the detailed description, which follows.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
Fig. 1 is a schematic diagram of a conventional key module that has a gap between the combined components;
Fig. 2 is a cross-sectional diagram of the first embodiment of a key module in accordance with the present invention;
Fig. 3 is a cross-sectional diagram of the second embodiment of the key module in accordance with the present invention;
Fig. 4 is a flow chart of a method for manufacturing the first and second embodiments of the key module in accordance with the present invention;
Fig. 5 is a cross-sectional diagram of the third embodiment of the key module in accordance with the present invention;
Fig. 6 is a cross-sectional diagram of the fourth embodiment of the key module in accordance with the present invention; and
Fig. 7 is a flow chart of a method for manufacturing the third and fourth embodiments of the key module in accordance with the present invention.

### DETAILED DESCRIPTION OF PREFERRED EMBODIMENTS

Reference is made to Fig. 2, which is a cross-sectional diagram of the first embodiment of a key module in accordance with the present invention. As shown in Fig. 2, the present invention provides a key module that includes a key body 1, a display body 2 and an elastic body 3.

The key body 1 has multiple opening portions 10 and is made of a metal or plastic material. The key body 1 is covered and integrated with the display body 2. The opening portions 10 are stuffed tightly with the display body 2. Thus, the key body 1 and the display body 2 both have a surface located along the same plane. The display body 2 is a membrane that can be colored or have written text printed on it. The design of the key body 1 itself or the opening portions 10 of the key body 1 allow the color or text to be seen. Moreover, due to the tight combination of the key body 1 and the display body 2, the gap located therebetween is reduced effectively to 0.01~0.03mm.

In addition, the elastic body 3 is made of a silicone rubber or plastic material. It is integrated tightly with and covers the display body 2. The elastic body 3 further has a contact block 30, which is used to contact a circuit board (not shown) located below the key module for signal transfer.

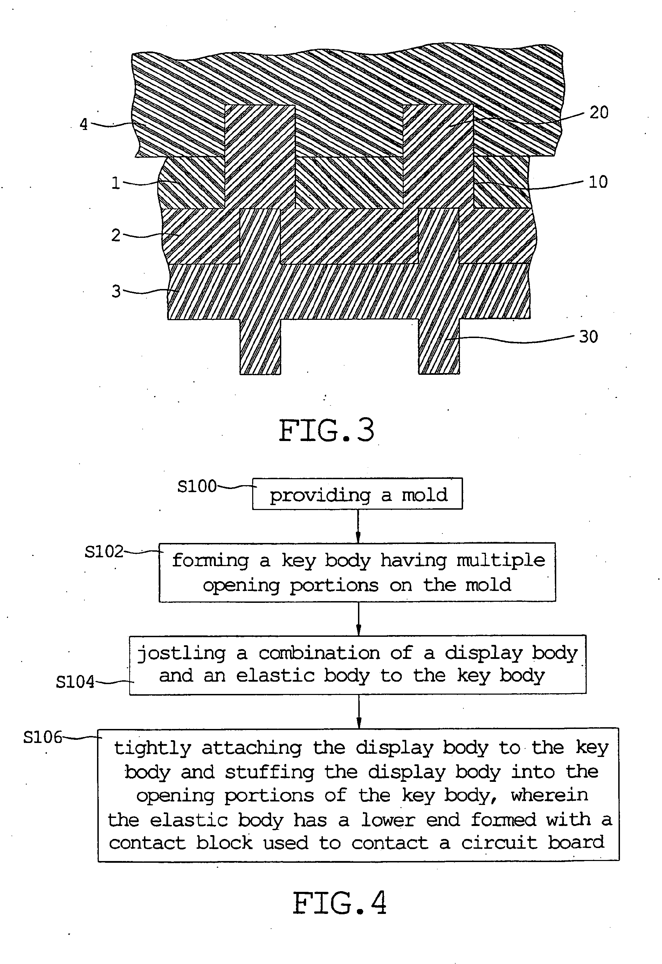

Reference is made to Fig. 3, which is a cross-sectional diagram of the second embodiment of the key module in accordance with the present invention. As shown in Fig. 3, the difference between the first and second embodiments is that the display body 2 of the second embodiment further has multiple projective portions 20 that pass through the opening portions 10 and project from the surface of the key body 1. The projective portions 20 create a three-dimensional feeling when a user presses the key module, and further provide a three-dimensional appearance.

Reference is made to Fig. 4, which is a flow chart of a method for manufacturing the first and second embodiments of the key module in accordance with the present invention. As shown in Fig. 4, the present invention provides a method for manufacturing a key module including the following steps. First, a mold is provided (S100). Next, a key body 1 having multiple opening portions 20 is formed on the mold. (S102). The key body 1 is made of a metal or plastic material. Then, a combination of a display body 2 and an elastic body 3 is jostled to the key body 1 (S104). Finally, the display body 2 is attached tightly to key body 1 and stuffed into the opening portions 10 of the key body 1; furthermore, a contact block 30 contacting a circuit board (not shown) is formed at the lower end of the elastic body 3 (S106). The jostling process can be performed by compression, injection or infusion molding. However, the present invention is not limited thereto. All of the processes that are capable of integrating the key body 1, the display body 2 and the elastic body 3 at the same time can be applied for the present invention.

Furthermore, the mold can be a plane mold 4 that is parallel to the surface of the key body 1. Via the plane mold 4, the surfaces of the display body 2 and the key body 1 are positioned along the same plane. In addition, the mold can also be a mold 5 that has indentations corresponding to the opening portions 10 of the key body 1. Via the mold 5, the projective portions 20 of the display body 2 that project from the surface of the key body 1 are formed.

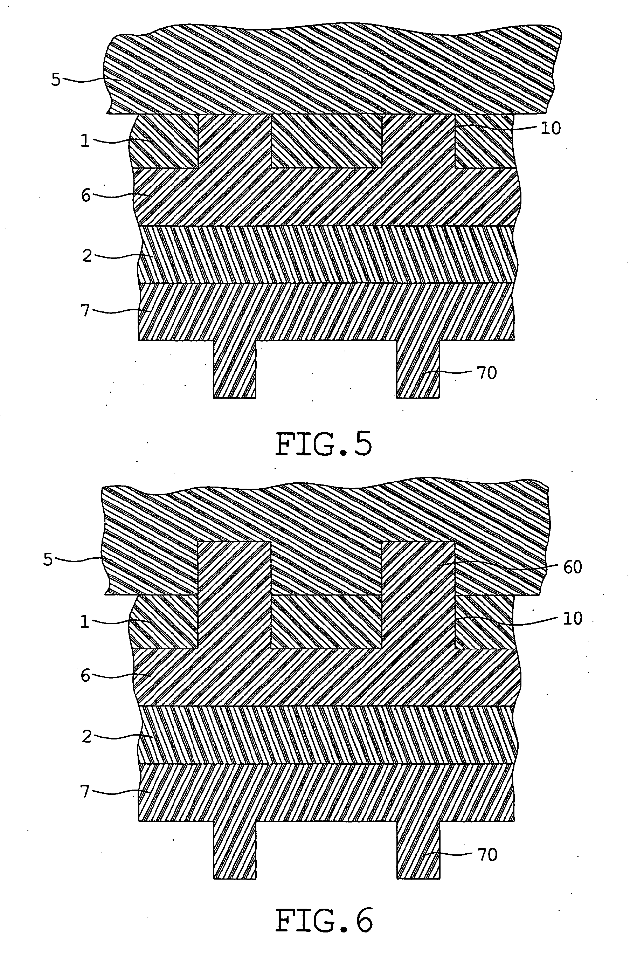

Reference is made to Fig. 5, which is a cross-sectional diagram of the third embodiment of the key module in accordance with the present invention. As shown in Fig. 5, the present invention provides a key module that includes a key body 1, a display body 2, a first elastic body 6 and a second elastic body 7.

The key body 1 has multiple opening portions 10 and is made of a metal or plastic material. The key body 1 is covered and integrated with the first elastic body 6. The opening portions 10 of the key body lare stuffed tightly with the first elastic body 6. Thus, the key body 1 and the first elastic body 6 both have a surface located along the same plane.

Furthermore, the first elastic body 6 is covered and integrated with the display body 2. The display body 2 is a membrane that can be colored or have written text printed on it. The design of the key body 1 itself, the opening portions 10 of the key body 1 and the first elastic body 6 allow the color or text to be seen. Thus, the key module of the present invention creates an aesthetically pleasing appearance.

Moreover, the second elastic body 7 is covered and integrated tightly with the surface of the display body 2. The second elastic body 7 further has a contact block 70, which contacts a circuit board (not shown) located below the key module for signal transfer. In addition, the first elastic body 6 and the second elastic body 7 are made of a silicone rubber or plastic material. Due to the tight combination of the key body 1 and first elastic body 6, the gap located therebetween is reduced effectively to 0.01~0.03mm.

Reference is made to Fig. 6, which is a cross-sectional diagram of the fourth embodiment of the key module in accordance with the present invention. As shown in Fig. 6, the difference between the third and fourth embodiments is that the first elastic body 6 of the fourth embodiment further has multiple projective portions 60 that pass through the opening portions 10 and project from the surface of the key body 1. The projective portions 60 create a three-dimensional feeling when a user presses the key module, and further provide a three-dimensional appearance.

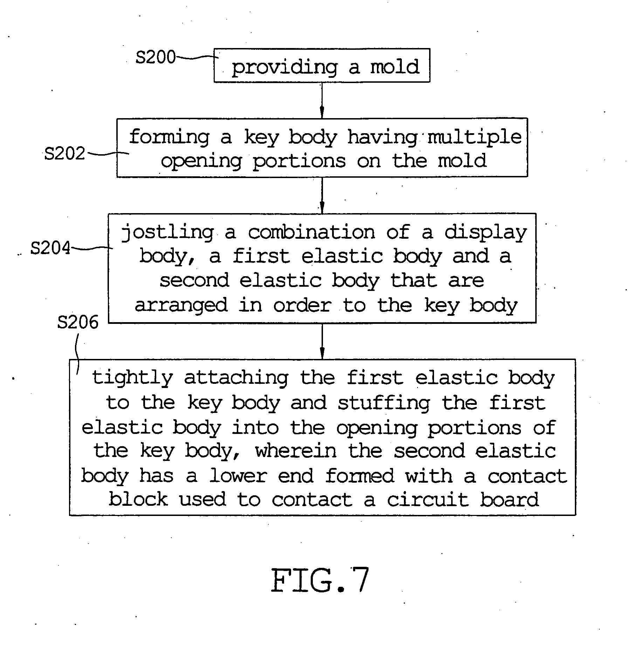

Reference is made to Fig. 7, which is a flow chart of a method for manufacturing the third and fourth embodiments of the key module in accordance with the present invention. As shown in Fig.7, the present invention provides a method for manufacturing a key module including the following steps. First, a mold is provided (S200). Next, a key body 1 having multiple opening portions 20 is formed on the mold (S202). The key body 1 is made of a metal or plastic material. Then, a combination of a display body 2, a first elastic body 6 and a second elastic body 7 that are arranged in order is jostled to the key body 1 (S204). The jostling process can be performed by compression, injection or infusion molding. However, the present invention is not limited thereto. All of the processes that are capable of tightly integrating the key body 1, the display body 2, the first elastic body 6 and the second elastic body 7 at the same time can be applied for the present invention.

Finally, the first elastic body 6 is attached tightly to key body 1 and stuffed into the opening portions 10 of the key body 1. Furthermore, a contact block 30 contacting a circuit board (not shown) is formed at the lower end of the second elastic body 7 (S206).

Furthermore, the mold can be a plane mold 4 that is parallel to the surface of the key body 1. Via the plane mold 4, the surfaces of the first elastic body 6 and the key body 1 are positioned along the same plane. In addition, the mold can also be a mold 5 that has indentations corresponding to the opening portions 10 of the key body 1. Via the mold 5, the projective portions 60 of the first elastic body 6 that project from the surface of the key body 1 are formed.

To sum up, in the present invention, by compressing, injecting or infusing a silicone rubber material or an elastic material into the opening portions, the gap located between the key body 1 and the display body 2 or between the key body 1 and the first elastic body 6 is smaller than 0.01mm. Thus, the appearance of the key module of the present invention is almost seamless.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are embraced within the scope of the invention as defined in the appended claims.

## Claims

1. A method for manufacturing a key module, comprising:
providing a mold;
forming a key body (1) having a plurality of opening portions on the mold;
jostling a combination of a display body (2) and an elastic body (3) to the key body; and
tightly attaching the display body (2) to the key body (1) and stuffing the display body (2) into the opening portions of the key body (1), wherein the elastic body (3) has a lower end formed with a contact block (30) contacting a circuit board.

2. The method as claimed in claim 1, wherein the mold is a plane mold parallel to a surface of the key body (1).

3. The method as claimed in claim 2, wherein the plane mold makes the surface of the key body (1) and a surface of the display body (2) positioned along the same plane.

4. The method as claimed in claim 1, wherein the mold has indentations corresponding to the opening portions of the key body (1).

5. The method as claimed in claim 1, wherein the mold has indentations to make the display body have projecting portions (20) that project from a surface of the key body (1).

6. The method as claimed in claim 1, wherein the key body (1) is made of a metal material or a plastic material.

7. The method as claimed in claim 1, wherein the display body (2) is a membrane with color or written text.

8. The method as claimed in claim 7, wherein the color or the written text of the display body (2) can be seen due to the design of the key body or the opening portions of the key body.

9. The method as claimed in claim 1, wherein the elastic body (3) is made of a silicone rubber material or a plastic material.

10. A method for manufacturing a key module (1), comprising:
providing a mold;
forming a key body (1) having a plurality of opening portions on the mold;
jostling a combination of a display body (2), a first elastic body (6) and a second elastic body (7) that are arranged in order to the key body (1); and
tightly attaching the first elastic body (6) to the key body and stuffing the first elastic body (6) into the opening portions of the key body (1), wherein the second elastic body (7) has a lower end formed with a contact block (70) used to contact a circuit board.

11. The method as claimed in claim 10, wherein the mold is a plane mold parallel to a surface of the key body (1).

12. The method as claimed in claim 11, wherein the plane mold makes the surface of the key body (1) and a surface of the display body (2) positioned along the same plane.

13. The method as claimed in claim 10, wherein the mold has indentations corresponding to the opening portions of the key body (1).

14. The method as claimed in claim 10, wherein the mold has indentations to make the display body (2) have projecting portions (60) that project from a surface of the key body (1).

15. The method as claimed in claim 10, wherein the key body (1) is made of a metal material or a plastic material.

16. The method as claimed in claim 10, wherein the display body (2) is a membrane with color or written text.

17. The method as claimed in claim 16, wherein the color or the written text of the display body (2) can be seen due to the design of the first elastic body, the second elastic body, the key body or the opening portions of the key body.

18. The method as claimed in claim 10, wherein the first elastic body and the second elastic body are made of a silicone rubber material or a plastic material.

19. A key module, comprising:
a key body (1) having a plurality of opening portions (10);
a display body (2) tightly integrated with and covered on a surface of the key body and tightly stuffed into the opening portions of the key body; **characterized in that** it comprises
an elastic body (3) tightly integrated with and covered on a surface of the display body and having a lower end formed with a contact block (30).

20. The key module as claimed in claim 19, wherein the key body (1) and the display body (2) both have a surface positioned along the same plane.

21. The key module as claimed in claim 19, wherein the display body further has a plurality of projecting portions (20) that project from a surface of the key body.

22. The key module as claimed in claim 19, wherein the key body (1) is made of a metal material or a plastic material.

23. The key module as claimed in claim 19, wherein the display body is a membrane (2) with color or written text.

24. The key module as claimed in claim 23, wherein the color or the written text of the display body (1) can be seen due to the design of the key body or the opening portions of the key body.

25. The key module as claimed in claim 19, wherein the elastic body (3) is made of a silicone rubber material or a plastic material.

26. A key module, comprising:
a key body (1) having a plurality of opening portions;
a first elastic body (6) tightly integrated with and covered on a surface of the key body (1) and tightly stuffed into the opening portions of the key body; **characterized in that** it comprises
a display body (2) tightly integrated with and covered on a surface of the first elastic body (6); and
a second elastic body (7) tightly integrated with and covered on a surface of the display body (2) and having a lower end formed with a contact block (70).

27. The key module as claimed in claim 26, wherein the key body (1) and the first elastic body (6) both have a surface positioned along the same plane.

28. The key module as claimed in claim 26, wherein the first elastic body further has a plurality of projecting portions (60) that project from a surface of the key body.

29. The key module as claimed in claim 26, wherein the key body (1) is made of a metal material or a plastic material.

30. The key module as claimed in claim 26, wherein the display body (2) is a membrane with color or written text.

31. The key module as claimed in claim 30, therein the color or the written text of the display body (2) can be seen due to the design of the first elastic body (6), the key body (1), the opening portions of the key body or the second elastic body (7).

32. The key module as claimed in claim 26, wherein the first elastic body (6) and the second elastic body (7) are made of a silicone rubber material or a plastic material.

## Patentansprüche

1. Verfahren zur Herstellung eines Tasten-Moduls, aufweisend:
Bereitstellen einer Form;
Formen eines Tastenkörpers (1), der eine Mehrzahl von Öffnungsabschnitten an der Form aufweist,
Zusammenstellen einer Kombination eines Anzeigekörpers (2) und eines elastischen Körpers (3) zu dem Tastenkörper (1); und
enges Zusammenfügen des Anzeigekörpers (2) zu dem Tastenkörper (1) und Eindrücken des Anzeigekörpers (2) in die Öffnungsteilabschnitte des Tastenkörpers (1), wobei der elastische Körper (3) ein unteres Ende hat, das mit einem Kontaktblock (30) ausgebildet ist, der mit einer gedruckten Schaltungsplatine Kontakt hat.

2. Verfahren nach Anspruch 1, wobei die Form eine ebene Form parallel zu einer Oberfläche des Tastenkörpers (1) ist.

3. Verfahren nach Anspruch 2, wobei die ebene Form die Oberfläche des Tastenkörpers (1) und eine Oberfläche des Anzeigekörpers (2), angeordnet entlang derselben Ebene, ausbildet.

4. Verfahren nach Anspruch 1, wobei die Form Ausbuchtungen hat, die den Öffnungsabschnitten des Tastenkörpers (1) entsprechen.

5. Verfahren nach Anspruch 1, wobei die Form Einbuchtungen hat zum Ausbilden von abstehenden Abschnitten (20) an dem Anzeigenkörper, die von einer Oberfläche des Tastenkörpers (1) abstehen.

6. Verfahren nach Anspruch 1, wobei der Tastenkörper (1) aus metallischem Material oder Kunststoffmaterial hergestellt wird.

7. Verfahren nach Anspruch 1, wobei der Anzeigekörper (2) eine Membrane mit einem Farbauftrag oder einem geschriebenen Text ist.

8. Verfahren nach Anspruch 7, wobei der Farbauftrag oder der geschriebene Text des Anzeigekörpers (2) infolge des Designs des Tastenkörpers oder der Öffnungsabschnitte des Tastenkörpers gesehen werden können.

9. Verfahren nach Anspruch 1, wobei der elastische Körper (3) aus Silikongummi-Material oder Kunststoffmaterial hergestellt wird.

10. Verfahren zur Herstellung eines Tastenmoduls (1), aufweisend:
Bereitstellen einer Form;
Formen eines Tastenkörpers (1), der eine Mehrzahl von Öffnungsabschnitten an der Form aufweist;
Zusammenstellen einer Kombination eines Anzeigekörpers (2), eines ersten elastischen Körpers (6) und eines zweiten elastischen Körpers (7), die mit dem Tastenkörper (1) in Reihenfolge zusammengestellt sind, und
enges Zusammenfügen des ersten elastischen Körpers (6) mit dem Tastenkörper und Eindrücken des ersten elastischen Körpers (6) in die Öffnungsabschnitte des Tastenkörpers (1), wobei der zweite elastische Körper (7) ein unteres Ende hat, das mit einem Kontaktblock (70) ausgebildet ist und der zum Kontaktieren einer gedruckten Schaltungsplatte verwendet wird.

11. Verfahren nach Anspruch 10, wobei die Form eine ebene Form parallel zu einer Oberfläche des Tastenkörpers (1) ist.

12. Verfahren nach Anspruch 11, wobei die ebene Form die Oberfläche des Tastenkörpers (1) und eine Oberfläche des Anzeigekörpers (2) ausbildet, die entlang derselben Ebene angeordnet sind.

13. Verfahren nach Anspruch 10, wobei die Form Ausbuchtungen hat, die den Öffnungsabschnitten des Tastenkörpers (1) entsprechen.

14. Verfahren nach Anspruch 10, wobei die Form Einbuchtungen hat z um Ausbilden von abstehenden Abschnitten (60) an dem Anzeigekörper (2), die von einer Oberfläche des Tastenkörpers (1) abstehen.

15. Verfahren nach Anspruch 10, wobei der Tastenkörper (1) aus metallischem Material oder Kunststoffmaterial hergestellt wird.

16. Verfahren nach Anspruch 10, wobei der Anzeigekörper (2) eine Membrane mit einem Farbauftrag oder einem geschriebenen Text ist.

17. Verfahren nach Anspruch 16, wobei der Farbauftrag oder der geschriebene Text des Anzeigekörpers (2) aufgrund des Designs des ersten elastischen Körpers, des zweiten elastischen Körpers, des Tastenkörpers oder der Öffnungsabschnitte des Tastenkörpers gesehen werden können.

18. Verfahren nach Anspruch 10, wobei der erste elastische Körper und der zweite elastische Körper aus einem Silikongummi-Material oder einem Kunststoffmaterial hergestellt werden.

19. T astenmodul, aufweisend:
einen Tastenkörper (1), der eine Mehrzahl von Öffnungsabschnitten (10) aufweist,
einen Anzeigekörper (2), der eng eingefügt ist mit und abgedeckt ist an einer Oberfläche des Tastenkörpers und eng eingefügt ist in Öffnungsabschnitte des Tastenkörpers, **dadurch gekennzeichnet, dass** es aufweist:
einen elastischen Körper (3), der eng eingefügt ist und abgedeckt ist an einer Oberfläche des Anzeigekörpers und ein unteres Ende aufweist, das mit einem Kontaktblock (30) ausgebildet ist.

20. Tastenmodul nach Anspruch 19, wobei der Tastenkörper (1) und der Anzeigekö rper (2) jeweils eine Oberfläche haben, die entlang derselben Ebene angeordnet ist.

21. Tastenmodul nach Anspruch 19, wobei der Anzeigekörper weiterhin eine Mehrzahl von abstehenden Teilstücken (20) aufweist, die von einer Oberfläche des Tastenkörpers abstehen.

22. Tastenmodul nach Anspruch 19, wobei der Tastenkörper (1) aus metallischem Material oder Kunststoffmaterial hergestellt ist.

23. Tastenmodul nach Anspruch 19, wobei der Anzeigekörper eine Membrane (2) mit einem Farbauftrag oder einem geschriebenen Text ist.

24. Tastenmodul nach Anspruch 23, wobei der Farbauftrag oder der geschriebene Text aufgrund des Designs des Anzeigekörpers oder der Öffnungsabschnitte des Tastenkörpers gesehen werden können.

25. Tastenmodul nach Anspruch 19, wobei der elastische Körper aus Siliko ngummi-Material oder Kunststoffmaterial hergestellt ist.

26. Tastenmodul, aufweisend:
einen Tastenkörper (1), der eine Mehrzahl von Öffnungsabschnitten hat;
einen ersten elastischen Körper (6), der eng zusammengefügt ist mit und abgedeckt ist an einer Oberfläche des Tastenkörpers (1) und eng eingefügt ist in die Öffnungsabschnitte des Tastenkörpers, **dadurch gekennzeichnet, dass** es aufweist:
einen Anzeigekörper (2), der eng zusammengefügt ist mit und abgedeckt ist an einer Oberfläche des ersten elastischen Körpers (6), und
einem zweiten elastischen Körper (7), der eng zusammengefügt ist mit und abgedeckt ist an einer Oberfläche des Anzeigekörpers (2) und ein unteres Ende aufweist, das mit einem Kontaktblock (70) ausgebildet ist.

27. Tastenmodul nach Anspruch 26, wobei der Tastenkörper (1) und der erste elastische Körper (6) jeweils eine Oberfläche haben, die entlang derselben Ebene angeordnet ist.

28. Tastenmodul nach Anspruch 26, wobei der erste elastische Körper weiterhin eine Mehrzahl von abstehenden Abschnitten (60) aufweist, die von einer Oberfläche des Tastenkörpers abstehen.

29. Tastenmodul nach Anspruch 26, wobei der Tastenköper (1) aus metallischem Material oder Kunststoffmaterial hergestellt ist.

30. Tastenmodul nach Anspruch 26, wobei der Anzeigekörper (2) eine Membran mit einem Farbauftrag oder einem geschriebenen Text ist.

31. Tastenmodul nach Anspruch 30, wobei der Farbauftrag oder der geschriebene Text des Anzeigekörpers (2) aufgrund des Designs des ersten elastischen Körpers (6), des Tastenkörpers (1), der Öffnungsabschnitte des Tastenkörpers oder des zweiten elastischen Körpers (7) gesehen werden können.

32. Tastenmodul nach Anspruch 26, wobei der erste elastische Körper (6) und der zweite elastische Körper (7) aus einem Silikongummi-Material oder einem Kunststoffmaterial hergestellt sind.

## Revendications

1. Procédé de fabrication d'un module de clavier, comprenant les étapes consistant à :
prévoir un moule ;
former un corps de clavier (1) comportant une pluralité de parties d'ouverture sur le moule ;
placer une combinaison d'un corps d'afficheur (2) et d'un corps élastique (3) sur le corps de clavier ; et
fixer fermement le corps d'afficheur (2) au corps de clavier (1) et placer le corps d'afficheur (2) dans les parties d'ouverture du corps de clavier (1), dans lequel le corps élastique (3) a une extrémité inférieure comportant un bloc de contacts (30) venant en contact avec une carte de circuit.

2. Procédé selon la revendication 1, dans lequel le moule est un moule plan parallèle à une surface du corps de clavier (1).

3. Procédé selon la revendication 2, dans lequel le moule plan amène la surface du corps de clavier (1) et une surface du corps d'afficheur (2) à se positionner le long du même plan.

4. Procédé selon la revendication 1, dans lequel le moule comporte des indentations correspondant aux parties d'ouverture du corps de clavier (1).

5. Procédé selon la revendication 1, dans lequel le moule comporte des indentations pour faire en sorte que le corps d'afficheur ait des parties saillantes (20) qui font saillie d'une surface du corps de clavier (1).

6. Procédé selon la revendication 1, dans lequel le corps de clavier (1) est réalisé en un matériau métallique ou en une matière plastique.

7. Procédé selon la revendication 1, dans lequel le corps d'afficheur (2) est une membrane en couleur ou avec un texte écrit.

8. Procédé selon la revendication 7, dans lequel la couleur ou le texte écrit du corps d'afficheur (2) peut être vu du fait de la conception du corps de clavier ou des parties d'ouverture du corps de clavier.

9. Procédé selon la revendication 1, dans lequel le corps élastique (3) est réalisé en caoutchouc de silicone ou en une matière plastique.

10. Procédé pour fabriquer un module de clavier (1), comprenant les étapes consistant à:
prévoir un moule ;
former un corps de clavier (1) comportant une pluralité de parties d'ouverture sur le moule ;
placer une combinaison d'un corps d'afficheur (2), d'un premier corps élastique (6) et d'un deuxième corps élastique (2) qui sont agencés dans l'ordre sur le corps de clavier (1) ; et
fixer fermement le premier corps élastique (6) au corps de clavier et placer le premier corps élastique (6) dans les parties d'ouverture du corps de clavier (1), dans lequel le deuxième corps élastique (7) a une extrémité inférieure comportant un bloc de contacts (70) utilisé pour venir en contact avec une carte de circuit.

11. Procédé selon la revendication 10, dans lequel le moule est un moule plan parallèle à une surface du corps de clavier (1).

12. Procédé selon la revendication 11, dans lequel le moule plan amène la surface du corps de clavier (1) et une surface du corps d'afficheur (2) à se positionner le long du même plan.

13. Procédé selon la revendication 10, dans lequel le moule comporte des indentations correspondant aux parties d'ouverture du corps de clavier (1).

14. Procédé selon la revendication 10, dans lequel le moule comporte des indentations pour faire en sorte que le corps d'afficheur (2) ait des parties saillantes (60) qui font saillie d'une surface du corps de clavier (1).

15. Procédé selon la revendication 10, dans lequel le corps de clavier (1) est réalisé en un matériau métallique ou en une matière plastique.

16. Procédé selon la revendication 10, dans lequel le corps d'afficheur (2) est une membrane en couleur ou avec un texte écrit.

17. Procédé selon la revendication 16, dans lequel la couleur ou le texte écrit du corps d'afficheur (2) peut être vu du fait de la conception du premier corps élastique, du deuxième corps élastique, du corps de clavier ou des parties d'ouverture du corps de clavier.

18. Procédé selon la revendication 10, dans lequel le premier corps élastique et le deuxième corps élastique sont réalisés en un caoutchouc de silicone ou en une matière plastique.

19. Module de clavier, comprenant :
un corps de clavier (1) comportant une pluralité de parties d'ouverture (10) ;
un corps d'afficheur (2) intégré étroitement avec et placé sur une surface du corps de clavier et placé étroitement dans les parties d'ouverture du corps de clavier ;
**caractérisé en ce qu'**il comprend :
un corps élastique (3) intégré étroitement avec et placé sur une surface du corps d'afficheur et ayant une extrémité inférieure comportant un bloc de contacts (30).

20. Module de clavier selon la revendication 19, dans lequel le corps de clavier (1) et le corps d'afficheur (2) ont tous deux une surface positionnée le long du même plan.

21. Module de clavier selon la revendication 19, dans lequel le corps d'afficheur comporte en outre une pluralité de parties saillantes (20) qui font saillie d'une surface du corps de clavier.

22. Module de clavier selon la revendication 19, dans lequel le corps de clavier (1) est réalisé en un matériau métallique ou en une matière plastique.

23. Module de clavier selon la revendication 19, dans lequel le corps d'afficheur est une membrane (2) en couleur ou avec un texte écrit.

24. Module de clavier selon la revendication 23, dans lequel la couleur ou le texte écrit du corps d'afficheur (1) peut être vu du fait de la conception du corps de clavier ou des parties d'ouverture du corps de clavier.

25. Module de clavier selon la revendication 19, dans lequel le corps élastique (3) est réalisé en caoutchouc de silicone ou en une matière plastique.

26. Module de clavier, comprenant :
un corps de clavier (1) comportant une pluralité de parties d'ouverture ;
un premier corps élastique (6) intégré étroitement avec et placé sur une surface du corps de clavier (1) et placé étroitement dans les parties d'ouverture du corps de clavier ;
**caractérisé en ce qu'**il comprend :
un corps d'afficheur (2) intégré étroitement avec et placé sur une surface du premier corps élastique (6) ; et
un deuxième corps élastique (7) intégré étroitement avec et placé sur une surface du corps d'afficheur (2) et ayant une extrémité inférieure comportant un bloc de contacts (70).

27. Module de clavier selon la revendication 26, dans lequel le corps de clavier (1) et le premier corps élastique (6) ont tous deux une surface positionnée le long du même plan.

28. Module de clavier selon la revendication 26, dans lequel le premier corps élastique comporte en outre une pluralité de parties saillantes (60) qui font saillie d'une surface du corps de clavier.

29. Module de clavier selon la revendication 26, dans lequel le corps de clavier (1) est réalisé en un matériau métallique ou en une matière plastique.

30. Module de clavier selon la revendication 26, dans lequel le corps d'afficheur (2) est une membrane en couleur ou avec un texte écrit.

31. Module de clavier selon la revendication 30, dans lequel la couleur ou le texte écrit du corps d'afficheur (2) peut être vu du fait de la conception du premier corps élastique (6), du corps de clavier (1), des parties d'ouverture du corps de clavier ou du deuxième corps élastique (7).

32. Module de clavier selon la revendication 26, dans lequel le premier corps élastique (6) et le deuxième corps élastique (7) sont réalisés en un caoutchouc de silicone ou en une matière plastique.
